Europäisches Patentamt

European Patent Office

Office européen des brevets

(19)

(11) Veröffentlichungsnummer: **0 371 081 B1**

(12) **EUROPÄISCHE PATENTSCHRIFT**

(45) Veröffentlichungstag der Patentschrift: **24.11.93**

(21) Anmeldenummer: **89900590.4**

(22) Anmeldetag: **02.12.88**

(86) Internationale Anmeldenummer:
**PCT/EP88/01101**

(87) Internationale Veröffentlichungsnummer:
**WO 89/12378 (14.12.89 89/29)**

(51) Int. Cl.⁵: **H05H 9/00**

(54) **SYMMETRISCHER LEITSCHIENENBESCHLEUNIGER.**

(30) Priorität: **06.06.88 DE 3819185**

(43) Veröffentlichungstag der Anmeldung:
**06.06.90 Patentblatt 90/23**

(45) Bekanntmachung des Hinweises auf die
Patenterteilung:
**24.11.93 Patentblatt 93/47**

(84) Benannte Vertragsstaaten:
**AT BE CH DE FR GB IT LI LU NL SE**

(56) Entgegenhaltungen:
**EP-A- 0 163 745**
**US-A- 4 494 040**

(73) Patentinhaber: **IGENWERT GMBH**
**Rauchstrasse 5**
**D-81679 München(DE)**

(72) Erfinder: **IGENBERGS, E.**
**Hiltensperger Str. 53**
**D-8000 München 40(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Postfach 22 16 11**
**D-80506 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen symmetrischen Leitschienenbeschleuniger gemäß dem Oberbegriff des Patentanspruchs 1.

Ein Beschleuniger zum Beschleunigen von Ionen ist aus der europäischen Patentanmeldung EP.A 0 163 745 bekannt und besteht aus vier symmetrisch einander gegenüberliegend angeordneten Laufschienen, die mit einer Wechselstromquelle verbunden sind, wobei jeweils benachbarte Laufschienen unterschiedliche Polarität und einander gegenüberliegende Laufschienen gleiche Polarität aufweisen. Durch Beaufschlagung der Laufschienen mit Wechselstrom entsteht in dem von den Laufschienen umschlossenen Hohlraum ein elektrisches Feld, mittels dem in diesen Hohlraum eingebrachte Ionen beschleunigt werden können.

Ein Beschleuniger gemäß der EP.A 0 163 745 ist ausschließlich zur Beschleunigung von elektrisch geladenen, nicht neutralen Teilchen geeignet, weshalb mit einem derartigen Beschleuniger kein elektrisch leitfähiges, neutrales Material beschleunigt werden kann.

Die Aufgabe der Erfindung besteht darin, einen Leitschienenbeschleuniger gemäß dem Oberbegriff des Patentanspruchs 1 zu schaffen, mit dem elektrisch neutrales, leitfähiges Material beschleunigt werden kann.

Erfindungsgemäß wird diese Aufgabe durch die im Patentanspruch 1 angegebenen Merkmale gelöst.

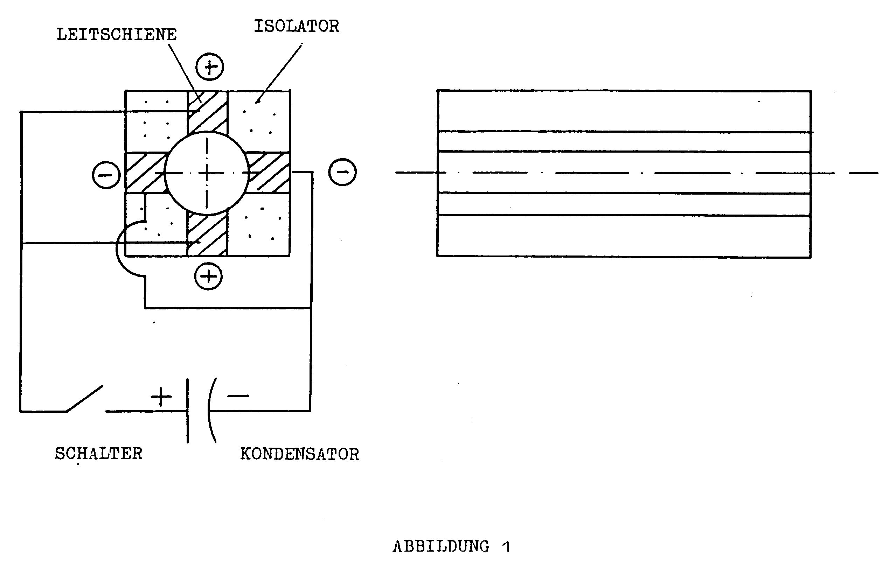

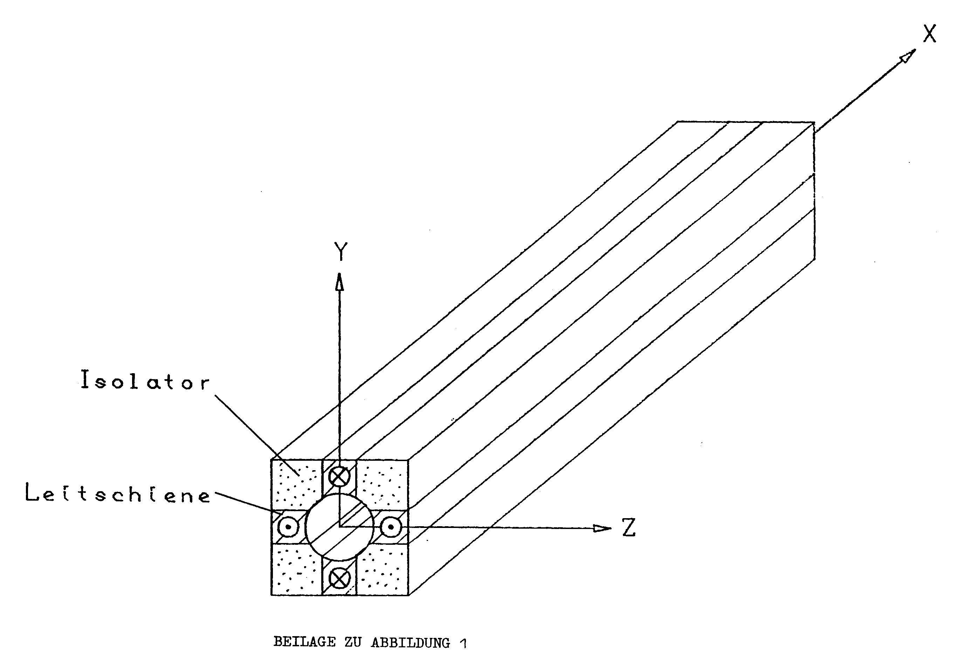

1. Der symmetrische Leitschienenbeschleuniger wird aus wenigstens 2 Leitschienenpaaren gebildet. Diese bestehen in Fall von 2 Leitschienenpaaren aus 4 Leitschienen aus elektrisch leitfähigem Material, die in gleichem Abstand von einer vorgegebenen Symmetrieachse und parallel zu dieser verlaufen (Abb. 1) und jeweils den gleichen Abstand voneinander haben. Diese Schienen werden an einem Ende abwechselnd an die positive oder die negative Seite einer Einrichtung zur Speicherung von elektrischer Energie über einen Schalter verbunden.

Die Leitschienen sind durch einen Isolator getrennt und entlang der Symmetrieachse verläuft ein symmetrischer Hohlraum, der von der Symmetrieachse bis zu den Leitschienen reicht. Dieser symmetrische Hohlraum wird vor der Inbetriebnahme des Beschleunigers (durch Schliessen der Schalter) an den Ende, das an die zur Energieversorgung führenden Schalter angeschlossen ist, mit elektrisch leitfähigem Material gefüllt. Dies kann ein fester leitfähiger Körper sein, dessen Form im Verlauf der Beschleunigung unverändert bleibt oder nur wenig verändert wird oder aber ein Körper (vorzugsweise eine Metallfolie oder Aluminiumfolie) dessen Form noch während der Beschleunigung sehr stark oder vollständig verändert wird. Nach Schliessen der Schalter fließt durch die Leitschienen und das zwischen diesen angebrachte elektrisch leitfähige Material ein elektrischer Strom. Dieser elektrische Strom tritt mit dem durch den in den Leitschienen sowie in dem elektrisch leitfähigen Körper fließenden elektrischen Strom erzeugten Magnetfeld in Wechselwirkung und der elektrisch leitfähige Körper wird entlang des zur Symmetrieachse parallelen symmetrischen Hohlraumes beschleunigt. Zugleich wirkt eine Kraft auf die Leitschienen. In dem Falle, daß der elektrisch leitfähige Körper eine Folie ist, wird durch den in dieser Folie fließenden Strom diese verdampft und ionisiert und um die stromdurchflossenen Leitschienen und den Strom in dem verdampften und ionisierten Material entsteht ein Magnetfeld. Die Wechselwirkung zwischen diesem Magnetfeld und dem fliessenden elektrischen Strom ergibt eine Kraft auf die Leitschienen und das verdampfte und ionisierte Material (Plasma). Dieses Plasma wird von dieser Kraft in Richtung der Symmetrieachse des Beschleunigers bis zu dem Ende des Beschleunigers hin beschleunigt, das dem an die elektrische Energieversorgung angeschlossenen entgegengesetzt ist. Dieses beschleunigte Plasma kann dazu verwendet werden, einen Körper, der vorzugsweise nicht elektrisch leitfähig ist, zu beschleunigen. Zu diesem Zweck wird dieser zu beschleunigende Körper zu Beginn des Beschleunigungsvorganges im symmetrischen Hohlraum so angebracht, daß er sich zwischen der Folie und dem Ende des Beschleunigers befindet, zu dem der Beschleunigungsvorgang gerichtet ist.

Insbesondere soll dieser Körper so ausgebildet sein, daß er vor und während des Beschleunigungsvorganges gleitend in dem symmetrischen Hohlraum bewegt werden kann und zugleich den Teil des symmetrischen Hohlraumes, in dem das beschleunigte Plasma entsteht, von dem Teil des symmetrischen Hohlraumes abdichtet, der vor dem Körper in Richtung zu dem Ende des Beschleunigers liegt, zu dem der Beschleunigungsvorgang gerichtet ist.

2. Der symmetrische Leitschienenbeschleuniger nach Anspruch 1 besteht aus Leitschienen, aus elektrisch leitfähigem Material und aus Isolatoren.

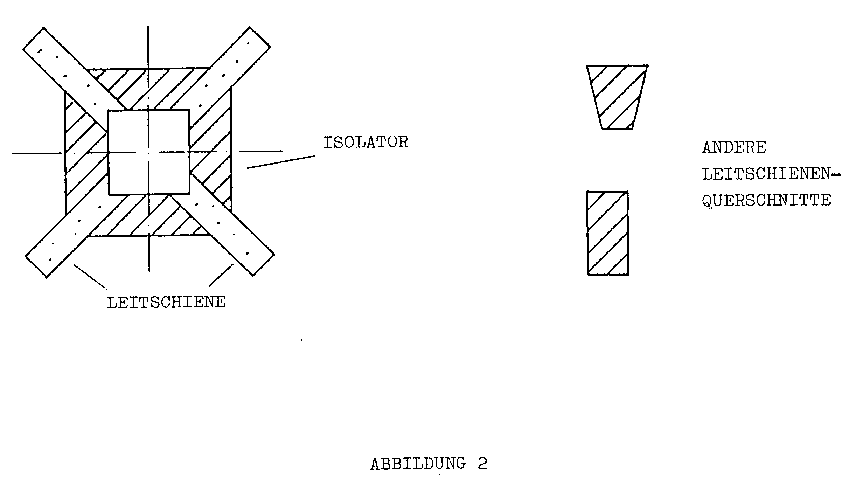

Für die Leitschienen ist Kupfer oder Messing besonders geeignet. Insbesondere sollen die Leitschienen aus dem gleichen Material bestehen, dieses soll einen möglichst niedrigen elektrischen Widerstand bei hoher mechanischer Festigkeit haben. Die Schienen können einen beliebigen, auch nicht symmetrischen Querschnitt haben (Abb. 2).

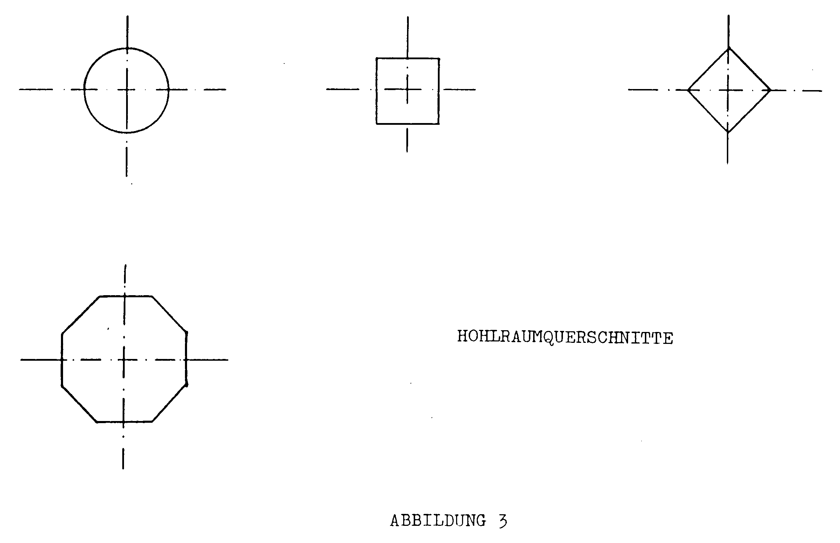

Der entlang der Symmetrieachse verlaufende Hohlraum kann einen beliebigen Querschnitt haben. Dieser Querschnitt kann insbesondere symmetrisch sein (vgl. Abb. 3). Vorzugsweise eignet sich der kreisförmige Querschnitt.

Die Isolatoren zwischen den Leitschienen sind so gebaut, daß der Strom zwischen den Leitschienen nur in dem Hohlraum zwischen den Schienen fliessen kann. Die Isolatoren sind so gebaut, daß sie die Zwischen den einzelnen Leitschienen auftretenden Kräfte aushalten und eine Verbiegung oder Verformung der Leitschienen verhindern. Vorzugsweise werden Werkstoffe verwendet, die einen hohen elektrischen Widerstand bei gleichzeitig hoher mechanischer Festigkeit aufweisen und bei denen zudem die thermische Ablation durch das Beschleunigungsplasma sowie der Abrieb durch den beschleunigten Körper gering ist.

3. Die Leitschienen des symmetrischen Leitschienenbeschleunigers nach Anspruch 1 und 2 sind abwechselnd an die positive und an die negative Seite eines Speichers für elektrische Energie angeschlossen. Der Anschluß ist in Abb. 1 dargestellt. Für die Ausbildung eines Leitschienenbeschleunigers zu einem symmetrischen Leitschienenbeschleuniger sind wenigstens 4 Leitschienen erforderlich, die abwechselnd an die positive bzw. die negative Seite der Energieversorgung angeschlossen sind. Der symmetrische Leitschienenbeschleuniger kann auch aus mehr als 2 Leitschienenpaaren bestehen.

4. Die Einrichtung zur Speicherung der elektrischen Energie für den symmetrischen Leitschienenbeschleuniger nach Ansprüchen 1, 2 und 3 muß die Eigenschaft haben, daß sie eine elektrische Energie in sehr kurzer Zeit zur Verfügung stellen kann.

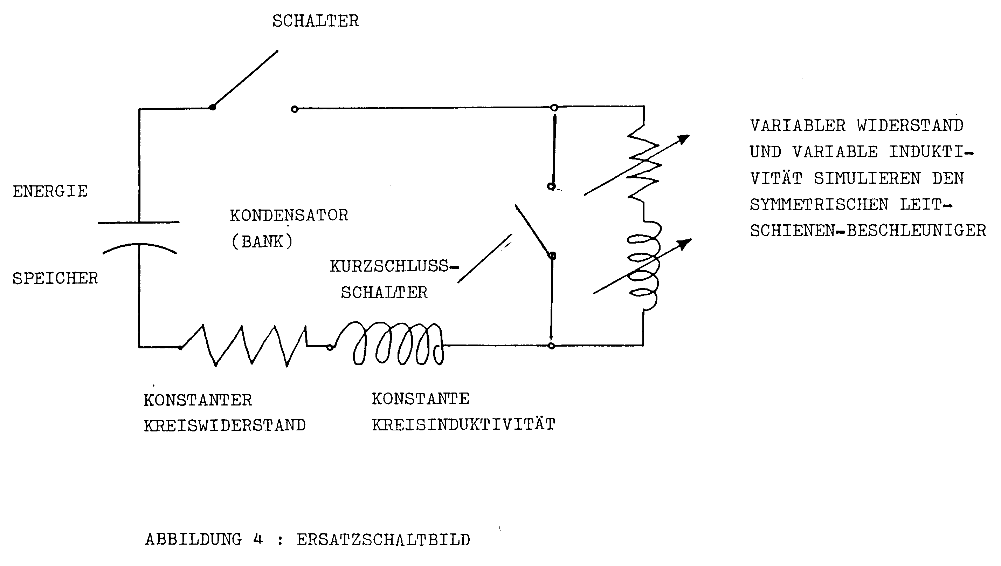

Insbesondere eignet sich hierfür ein elektrischer Kondensator oder eine in einer Kondensatorbatterie zusammengefaßte Anzahl von Kondensatoren, die über einen oder mehrere Schalter mit dem symmetrischen Leitschienenbeschleuniger verbunden sind. Wird dieser Schalter geschlossen, dann fließt die in den Kondensator bzw. in der Kondensatorbatterie gespeicherte Energie in den Leitschienenbeschleuniger. Die Schaltung dieses Systems ist in Abb. 4 in einem Ersatzschaltbild dargestellt.

Für die Energieversorgung des symmetrischen Leitschienenbeschleunigers kann auch ein homopolarer Generator mit nachgeschaltetem Induktor verwendet werden oder ein an eine hinreichend leistungsfähige Stromversorgung angeschlossener induktiver Speicher.

Die gespeicherte Energie liegt für beide Einrichtungen zur Energieversorgung zwischen 10 kJ und 100 MJ. Die auftretende maximale Spannung liegt zwischen 100 V und 100 kV, die fliessende Stromstärke liegt zwischen 10 kA und 10 MA.

Die Entladung muß durch wenigstens einen elektrischen Schalter betätigt werden. Dieser kann eine offene oder geschlossene Funkenstrecke beinhalten. Besonders geeignet ist ein Quecksilberdamufschalter (Ignitron).

Im Stromkreis kann, wie es im Ersatzschaltbild in Abb. 4 angedeutet ist, ein Kurzschlußschalter eingebaut werden. Dieser wird in der Fachsprache als "Crow Bar Switch" bezeichnet. Dieser wird geschlossen, wenn der Strom, der zu dem Leitschienenbeschleuniger fließt, seinen höchsten Wert erreicht hat. Hierdurch wird ein Durchschwingen des in Abb. 4 dargestellten Schwingkreises möglichst stark unterbunden, die Dauer des Beschleunigungsvorganges und damit die erreichbare Endgeschwindigkeit nimmt zu und der Wirkungsgrad des Beschleunigers verbessert sich. Außerdem wird eine Wiederzündung eines Lichtbogens am Abfang des symmetrischen Leitschienenbeschleunigers wie auch am Ende des Leitschienenbeschleunigers hierdurch stark verhindert, durch die der sonst durch den zu beschleunigenden elektrisch leitfähigen Körper oder durch das beschleunigende Plasma fliessende elektrische Strom kurzgeschlossen wird.

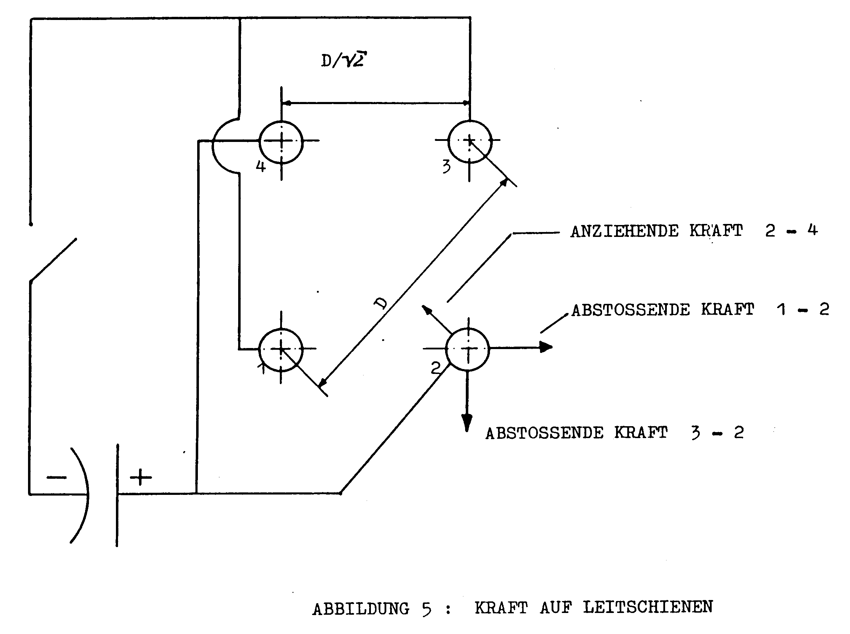

5. Ein symmetrischer Leitschienenbeschleuniger nach Ansprüchen 1, 2, 3 und 4 hat insbesondere die Eigenschaft, daß, wie in Abb. 5 dargestellt, zwischen den einzelnen Leitschienen neben abstossenden auch anziehende Kräfte auftreten. Hinzu kommt, daß sich durch die symmetrische Anordnung der Leitschienen Anteile der abstossenden Kräfte aufheben. Bei gleichem gesamten elektrischen Strom, der zum Beschleuniger fließt, wird in einem symmetrischen Leitschienenbeschleuniger mit 2 Leitschienenpaaren pro Leitschiene der halbe elektrische Strom fliessen wie in einem herkömmlichen Leitschienenbeschleuniger mit nur einem Leitschienenpaar und die auf eine Leitschiene wirkende abstossende, also von der Symmetrielinie des Beschleunigers radial nach außen wirkende Kraft wird beim symmetrischen Leitschienenbeschleuniger, wenn die Leitschienen durch beliebig lange Stromfäden angenähert werden, viermal geringer sein als beim herkömmlichen Leitschienenbeschleuniger mit einem Leitschienenpaar, wenn der Abstand der beiden Leitschienen eines herkömmlichen Leitschienenbeschleunigers gleich ist der Diagonalen D des in Abb. 5 gezeigten symmetrischen Leitschienenbeschleunigers.

Zugleich wird in diesem Fall die beschleunigende Kraft auf den zu beschleunigenden Körper beim symmetrischen Leitschienenbeschleuniger nur halb so groß sein, wie beim herkömmlichen Leitschienenbeschleuniger mit einem Paar von Leitschienen.

Damit zeigt in diesem Fall der symmetrische Leitschienenbeschleuniger ein zweimal so großes Verhältnis von Beschleunigungskraft zu Abstossungskraft. Im allgemeinen wird das Verhältnis von Beschleunigungskraft zu Abstossungskraft beim symmetrischen Leitschienenbeschleuniger wegen dessen symmetrischer Ausbildung stets höher sein als beim herkömmlichen Leitschienenbeschleuniger mit einem Leitschienenpaar.

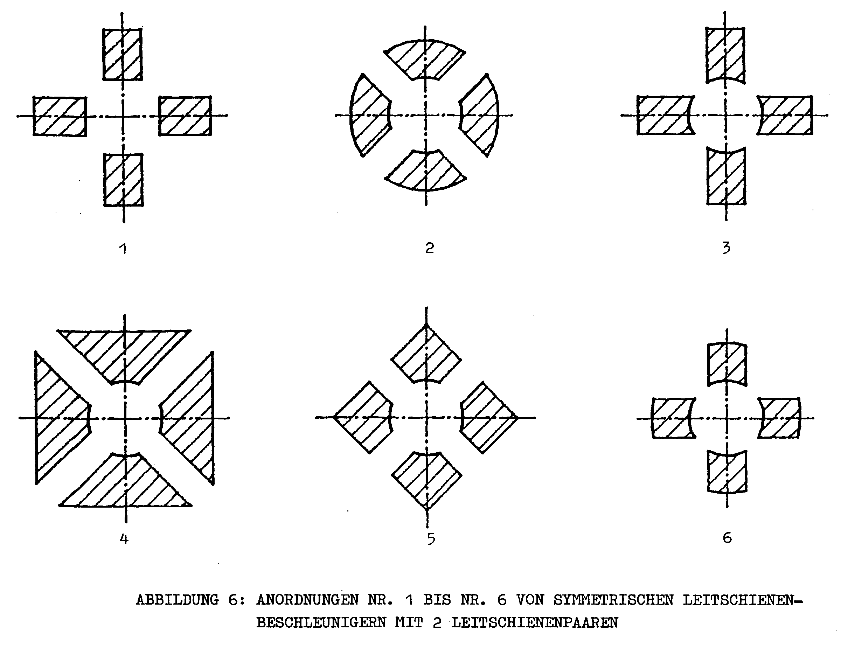

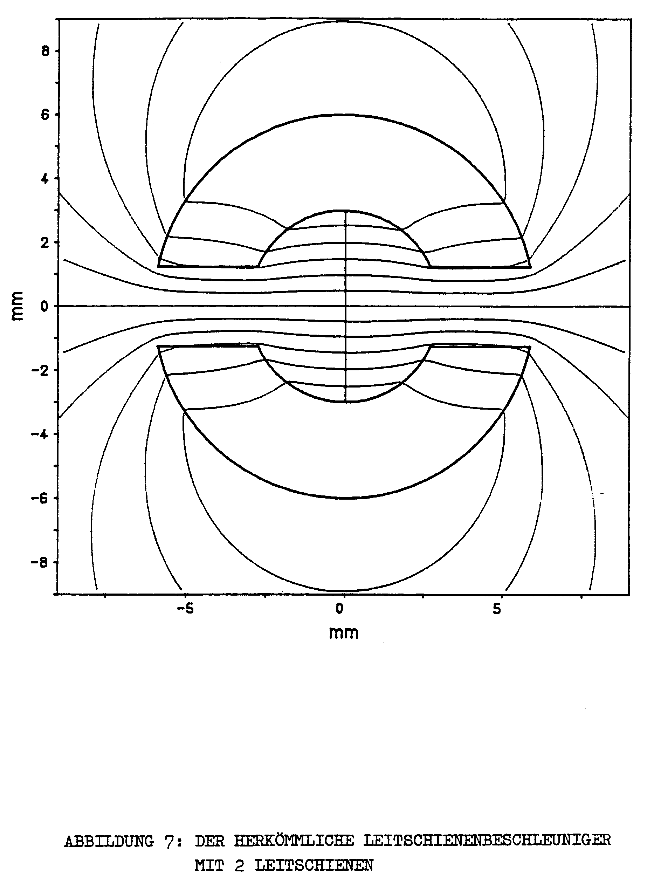

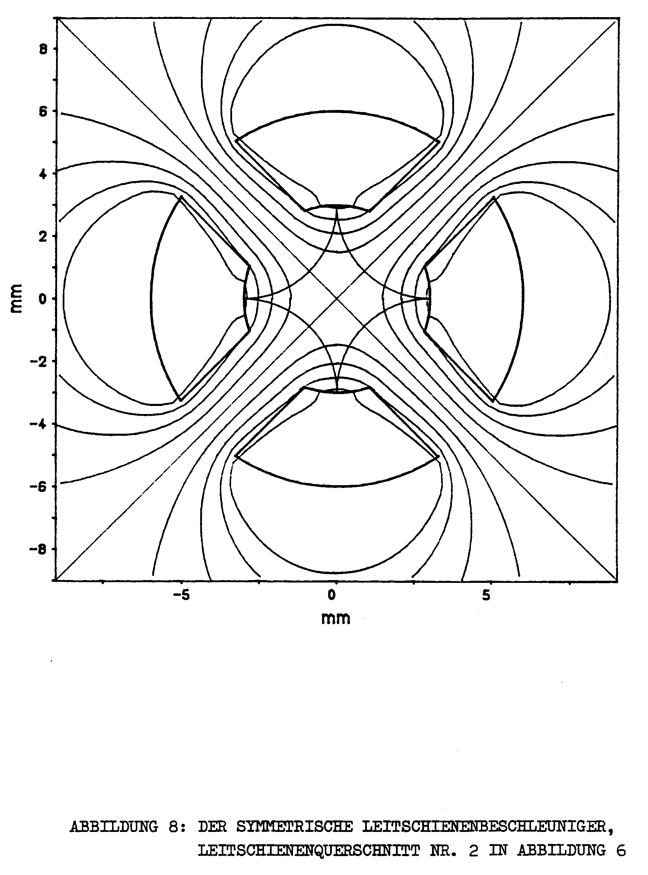

6. Der symmetrische Leitschienenbeschleuniger nach den Ansprüchen 1 bis 5 kann, je nach Kombination von Leitschienenquerschnitten, wie sie z.B. in Abb. 2 gezeigt sind und von Hohlraumquerschnitten, wie sie in Abb. 3 gezeigt sind, eine unterschiedliche Ausbildung haben. In Abb. 6 sind 6 Beispiele für solche Ausbildungen gezeigt. Besonders günstig kann eine Ausbildung mit möglichst kleiner Querschnittsfläche der Elektroden sein.

7. Der Vergleich eines herkömmlichen Leitschienenbeschleunigers mit einem Leitschienenpaar und einem symmetrischen Leitschienenbeschleuniger mit zwei Leitschienenpaaren ist in den Abbildungen 7, 8 und 9 durchgeführt.

Alle 5 Anordnungen sind aus einem Kreisrohr mit gleichem Außendurchmesser und gleichem Innendurchmesser erzeugt worden. Die Abmessungen sind in der Tabelle 1 zusammengestellt.

Zusammen mit den Querschnitten und den Anordnungen der Leitschienen sind jeweils die magnetischen Feldlinien sowie der durch einen Stromfaden bzw. mehrere Stromfäden angenährte elektrische Strom zwischen den Leitschienen dargestellt.

In jede Leitschienenanordnung fließt der gleiche elektrische Gesamtstrom, dieser teilt sich dann entweder auf 2 oder auf 4 Leitschienen auf. Die Ergebnisse der Berechnungen sind in der Tabelle 2 zusammengefaßt, sie zeigen, daß das unter vereinfachenden Annahmen bestimmte Verhältnis von Beschleunigungskraft zu Abstossungskraft beim Vergleich von speziellen Ausbildungen von Leitschienen bzw. Leitschienenpaaren sowohl unter- wie überschritten werden kann.

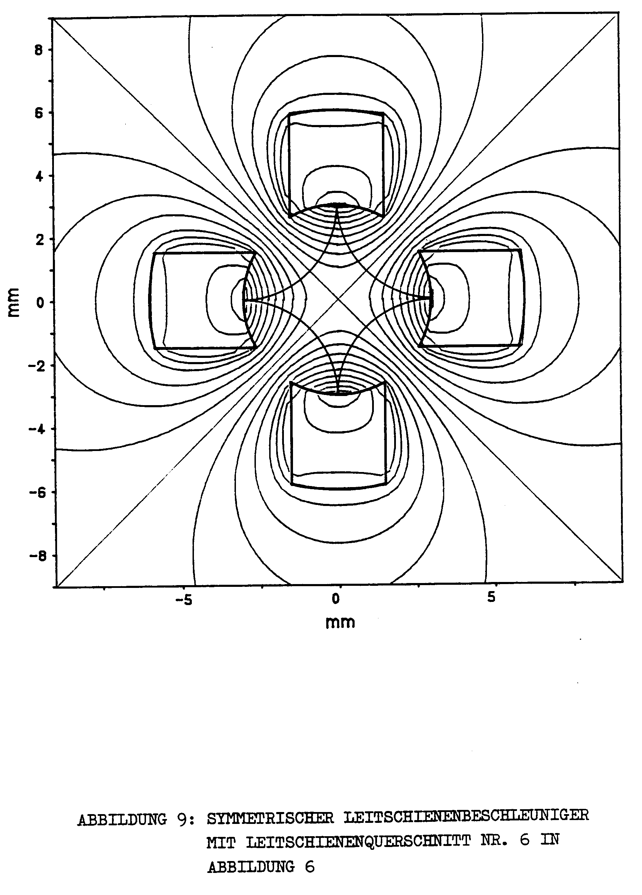

8. Die Symmetrie der Leitschienen im symmetrischen Leitschienenbeschleuniger führt zu solchen Anordnungen von Magnetfeld und Stromfluß im symmetrischen Hohlraum, wie sie in den Abbildungen 8 oder 9 dargestellt sind. Hierbei ergeben sich radial nach innen zur Symmetrieachse wirkende Kräfte, die bei der Anordnung nach Anspruch 1 mit einem beschleunigenden Plasma zu einer Fokussierung der Plasmaströmung zur Symmetrieachse führen. Die gleichen Kräfte bewirken eine wesentliche Verringerung der Erosion bzw. Ablation der zwischen den Leitschienen befindlichen Isolatoren.

ANORDNUNG ABBILDUNG 7

Innenradius    3.0mm

Außenradius    6.0mm

Spaltbreite    2.5mm

Stromstärke 180.0kA

Integrationsschrittweite
.02mm

Relativer Feldlinienabstand
.0050

Railumfang    29.46mm

Railquerschnittsfläche
34.80mm2

Widerstand pro Länge
.247mΩ/m
bei ρ=.0172Ωmm2/m


ANORDNUNG ABBILDUNG 8

Innenradius    3.0mm

Außenradius    6.0mm

Spaltbreite    2.5mm

Stromstärke 180.0kA

Integrationsschrittweite
.02mm

Relativer Feldlinienabstand
.0050  geändert auf .00250

Railumfang    15.32mm

Railquerschnittsfläche
13.59mm$^2$

Widerstand pro Länge
.316mΩ/m
bei ρ=.0172Ωmm$^2$/m


ANORDNUNG ABBILDUNG 9

Innenradius    3.0mm

Außenradius    6.0mm

Railbreite    3.0mm

Stromstärke 180.0kA

Integrationsschrittweite
.02mm

Relativer Feldlinienabstand
.0050  geändert auf .00250

Railumfang    12.60mm

Railquerschnittsfläche
9.20mm2

Widerstand pro Länge
.467mΩ/m
bei ρ=.0172Ωmm2/m


TABELLE 1

EP 0 371 081 B1

EP 0 371 081 B1

ANORDNUNG ABBILDUNG 7

| | | |
|---|---|---|
| Innenradius 3.0mm | Spaltbreite 2.5mm | Außenradius 6.0mm |
| Stromstärke 180.kA | Integrationsschrittweite .02mm | |
| Railumfang 29.46mm | Induktivitätsgradient .320µH/m | |
| Beschleunigungskraft 5.183kN | Abstoßungskraft/Länge .736kN/mm | |
| (Beschleunigungs-/Abstoßungskraft)*Länge 7.037mm | | |

ANORDNUNG ABBILDUNG 8

| | | |
|---|---|---|
| Innenradius 3.0mm | Spaltbreite 2.5mm | Außenradius 6.0mm |
| Stromstärke 180.kA | Integrationsschrittweite .02mm | |
| Railumfang 15.82mm | Induktivitätsgradient .468µH/m | |
| Beschleunigungskraft 1.896kN | Abstoßungskraft/Länge .125kN/mm | |
| (Beschleunigungs-/Abstoßungskraft)*Länge 15.137mm | | |

ANORDNUNG ABBILDUNG 9

| | | |
|---|---|---|
| Innenradius 3.0mm | Railbreite 3.0mm | Außenradius 6.0mm |
| Stromstärke 180.kA | Integrationsschrittweite .02mm | |
| Railumfang 12.60mm | Induktivitätsgradient 1.031µH/m | |
| Beschleunigungskraft 4.177kN | Abstoßungskraft/Länge .234kN/mm | |
| (Beschleunigungs-/Abstoßungskraft)*Länge 17.838mm | | |

TABELLE 2

## Patentansprüche

1. Symmetrischer Leitschienenbeschleuniger mit Leitschienen aus elektrisch leitfähigem Material, die unter Ausbildung eines Hohlraumes in gleichem Abstand zu einer vorgegebenen Symmetrieachse und mit gleichem gegenseitigen Umfangsabstand durch Isolatoren voneinander getrennt parallel zur Symmetrieachse verlaufend angeordnet sind, wobei die Schienen an einem Ende abwechselnd an die positive oder negative Seite einer Einrichtung zur Speicherung von elektrischer Energie anschließbar sind,
dadurch **gekennzeichnet,**
daß wenigstens zwei Leitschienenpaare vorgesehen sind, die über eine Schalteinrichtung an die Einrichtung zur Speicherung von elektrischer Energie anschließbar sind, und daß der Hohlraum im Querschnitt symmetrisch, insbesondere kreisförmig, quadratisch oder achteckig ausgebildet ist und

6

einen mit elektrisch leitfähigem Material befüllbaren Beschleunigungsraum bildet, wobei das elektrisch leitfähige Material in fester, sich während der Beschleunigung im wesentlichen nicht verändernder Form, beispielsweise als fester Körper, oder in einer sich während der Beschleunigung sehr stark oder vollständig verändernder Form, beispielsweise als Metallfolie, vorliegt.

2.  Leitschienenbeschleuniger nach Anspruch 1,
    dadurch **gekennzeichnet,**
    daß das elektrisch leitfähige Material aus einer durch Stromfluß in einen verdampften und ionisierten Plasmazustand überführbaren Folie besteht und daß ein insbesondere elektrisch nicht leitender Körper vor und während des Beschleunigungsvorgangs im Hohlraum beweglich und den Plasmaraum zum Beschleunigerende hin abdichtend angeordnet ist.

3.  Leitschienenbeschleuniger nach einem der vorhergehenden Ansprüche,
    dadurch **gekennzeichnet,**
    daß die einzelnen Leitschienen aus gleichem Material, insbesondere aus Kupfer oder Messing bestehen.

4.  Leitschienenbeschleuniger nach einem der vorhergehenden Ansprüche,
    dadurch **gekennzeichnet,**
    daß die Leitschienen einen symmetrischen Querschnitt besitzen, der insbesondere die Form eines Rechtecks, Trapezes oder Ringsektors aufweist, wobei der hohlraumseitig gelegene Bereich jeweils der lokalen Hohlraumform angepaßt ist.

5.  Leitschienenbeschleuniger nach einem der vorhergehenden Ansprüche,
    dadurch **gekennzeichnet,**
    daß die Leitschienen zusammen mit den dazwischen liegenden Isolatoren insbesondere eine zylindrische oder rechteckige Gesamtstruktur bilden.

6.  Leitschienenbeschleuniger nach einem der vorhergehenden Ansprüche,
    dadurch **gekennzeichnet,**
    daß die Leitschienen an den Eckbereichen eines mehreckigen Hohlraumes gelegen sind.

7.  Leitschienenbeschleuniger nach einem der vorhergehenden Ansprüche,
    dadurch **gekennzeichnet,**
    daß die Isolatoren aus einem Werkstoff bestehen, der gleichzeitig einen hohen elektrischen Widerstand und eine hohe mechanische Festigkeit besitzt und bei den die thermische Ablation durch das Beschleunigungsplasma sowie der Abrieb durch den beschleunigten Körper gering ist.

8.  Leitschienenbeschleuniger nach einem der vorhergehenden Ansprüche,
    dadurch **gekennzeichnet,**
    daß die Einrichtung zum Speichern elektrischer Energie aus einer Kondensatorbatterie oder einem homopolaren Generator mit nachgeschaltetem Induktor besteht.

9.  Leitschienenbeschleuniger nach einem der vorhergehenden Ansprüche,
    dadurch **gekennzeichnet,**
    daß die Schalteinrichtung eine offene oder geschlossene Funkenstrecke beinhaltet.

10. Leitschienenbeschleuniger nach Anspruch 9,
    dadurch **gekennzeichnet,**
    daß die Schalteinrichtung ein Ignitron umfaßt.

11. Leitschienenbeschleuniger nach einem der vorhergehenden Ansprüche,
    dadurch **gekennzeichnet,**
    daß im Stromkreis zwischen der Energiequelle und den Leitschienen ein Kurzschlußschalter angeordnet ist, der dann geschlossen wird, wenn der zum Beschleuniger fließende Strom seinen höchsten Wert erreicht hat.

**12.** Leitschienenbeschleuniger nach einem der vorhergehenden Ansprüche,
dadurch **gekennzeichnet,**
daß der Flächenanteil der Leitschienen im Querschnitt der Gesamtstruktur größer ist als der Flächenanteil der Isolatoren.

**Claims**

1. Symmetric rail accelerator comprising rails of electrically conductive material which, while forming a cavity, are arranged at the same distance from a predetermined symmetry axis extending parallel to the symmetry axis and separated from each other by the same mutual peripheral spacing by insulators, the rails being alternatingly connectable at one end to the positive or negative side of a means for storing electrical energy, **characterized in that** at least two rail pairs are provided which are connectable via a switch means to the means for storing electrical energy; and in that the cavity has a symmetric, in particular circular, square or octagonal cross-section and forms an acceleration space fillable with an electrically conductive material, with the electrically conductive material being present either in solid form which does not change at least substantially during acceleration, for instance as a solid body, or in a form which changes very greatly or completely during acceleration, for instance as a metal foil.

2. Rail accelerator in accordance with claim 1, characterized in that the electrically conductive material comprises a foil convertible through flow of current into a vapourized and ionized plasma state; and in that a body, in particular an electrically non-conducting body, is arranged in the cavity so as to be movable prior to and during the acceleration process and so as to seal off the plasma space in the direction towards the end of the accelerator.

3. Rail accelerator in accordance with one of the preceding claims, characterized in that the individual rails are made of the same material, in particular of copper or brass.

4. Rail accelerator in accordance with one of the preceding claims, characterized in that the rails have a symmetric cross-section, which, in particular, has the shape of a rectangle, trapezium or ring sector, with the region disposed at the cavity side being in each case matched to the local cavity shape.

5. Rail accelerator in accordance with one of the preceding claims, characterized in that the rails, together with the insulators lying between them, form an overall structure which is, in particular, cylindrical or rectangular.

6. Rail accelerator in accordance with one of the preceding claims, characterized in that the rails are disposed at the corner regions of a multi-cornered cavity.

7. Rail accelerator in accordance with one of the preceding claims, characterized in that the insulators are made of a material which simultaneously has a high electrical resistance and a high mechanical strength and for which the thermal ablation due to the acceleration plasma as well as the abrasion by the accelerated body is small.

8. Rail accelerator in accordance with one of the preceding claims, characterized in that the means for storing electrical energy comprises a battery of capacitors or a homopolar generator with an inductor connected thereafter.

9. Rail accelerator in accordance with one of the preceding claims, characterized in that the switch means contains an open or closed spark gap.

10. Rail accelerator in accordance with claim 10, characterized in that the switch means includes an ignitron.

11. Rail accelerator in accordance with one of the preceding claims, characterized in that a short circuit switch is arranged in the current circuit between the energy source and the rails, which is then closed when the current flowing to the accelerator has reached its highest value.

12. Rail accelerator in accordance with one of the preceding claims, characterized in that the areal contribution of the rails to the cross-section of the entire structure is larger than the areal contribution of the insulators.

**Revendications**

1. Accélérateur symétrique à rails de guidage avec des rails de guidage en matériau électriquement conducteur qui sont disposés autour d'un espace creux séparés l'un de l'autre parallèlement à un axe de symétrie prédéterminé à égales distances par rapport à cet axe et séparés l'un de l'autre par des isolateurs à des distances mutuelles égales dans le sens périphérique, les rails étant raccordables à une extrémité alternativement aux côtés positif ou négatif d'un dispositif d'accumulation d'énergie électrique,
caractérisé en ce que,
au moins deux paires de rails de guidage sont prévues qui sont raccordables par l'intermédiaire d'un dispositif de commutation à l'agencement pour l'accumulation de l'énergie électrique, et en ce que l'espace creux est constitué symétrique en coupe transversale, en particulier de forme circulaire quadratique ou octogonale et forme un espace d'accélération susceptible d'être rempli de matériau électriquement conducteur, le matériau électriquement conducteur se présentant sous une forme solide qui ne se déforme pratiquement pas pendant l'accélération, par exemple un corps solide, ou sous une forme susceptible de changer très fortement ou complètement pendant l'accélération, par exemple sous la forme d'une feuille métallique.

2. Accélérateur selon la revendication 1, caractérisé en ce que le matériau électriquement conducteur consiste en une feuille susceptible d'être transformée par l'écoulement du courant en un état de plasma vaporisé ou ionisé et en ce qu'un corps, en particulier électriquement non conducteur, est disposé avant et pendant le processus d'accélération de façon mobile dans l'espace creux et de façon à fermer de manière étanche l'espace de plasma du côté de l'extrémité d'accélération.

3. Accélérateur selon l'une quelconque des revendications précédentes, caractérisé en ce que les rails de guidage individuels sont en un même matériau, en particulier cuivre ou laiton.

4. Accélérateur selon l'une quelconque des revendications précédentes, caractérisé en ce que les rails de guidage présentent une section symétrique, en particulier en forme de rectangle, trapèze ou secteur annulaire où la zone située du côté espace creux est chaque fois adaptée à la forme locale d'espace creux.

5. Accélérateur selon l'une quelconque des revendications précédentes, caractérisé en ce que les rails de guidage forment ensemble avec les isolateurs placés entre eux une structure globale, en particulier cylindrique ou rectangulaire.

6. Accélérateur selon l'une quelconque des revendications précédentes, caractérisé en ce que les rails de guidage sont placés dans les zones d'angle d'un espace creux polygonal.

7. Accélérateur selon l'une quelconque des revendications précédentes, caractérisé en ce que les isolateurs sont en un matériau qui présente simultanément une résistance électrique élevée et une résistance mécanique élevée et dans lequel l'ablation thermique par le plasma d'accélération, de même que l'usure par frottement du corps accéléré, est faible.

8. Accélérateur selon l'une quelconque des revendications précédentes, caractérisé en ce que le dispositif d'accumulation d'énergie électrique consiste en une batterie de condensateur ou un générateur homopolaire avec un inducteur y raccordé.

9. Accélérateur selon l'une quelconque des revendications précédentes, caractérisé en ce que le dispositif de commutation comporte un parcours d'arc ouvert ou fermé.

10. Accélérateur selon l'une quelconque des revendications précédentes, caractérisé en ce que le dispositif de commutation comporte un ignitron.

**11.** Accélérateur selon l'une quelconque des revendications précédentes, caractérisé en ce qu'il est disposé dans le circuit entre la source d'énergie et les rails de guidage, un commutateur de court-circuit qui est fermé lorsque le courant s'écoulant dans l'accélérateur atteint sa valeur la plus élevée.

**12.** Accélérateur selon l'une quelconque des revendications précédentes, caractérisé en ce que la participation en surface des rails de guidage à la section de la structure globale est plus grande que la participation en surface des isolateurs.

LEITSCHIENE    ISOLATOR

SCHALTER    KONDENSATOR

EP 0 371 081 B1

ABBILDUNG 1

X

Y

Isolator

Leitschiene

Z

BEILAGE ZU ABBILDUNG 1

ISOLATOR

LEITSCHIENE

ANDERE
LEITSCHIENEN-
QUERSCHNITTE

ABBILDUNG 2

EP 0 371 081 B1

HOHLRAUMQUERSCHNITTE

ABBILDUNG 3

14

VARIABLER WIDERSTAND UND VARIABLE INDUKTI-VITÄT SIMULIEREN DEN SYMMETRISCHEN LEIT-SCHIENEN-BESCHLEUNIGER

SCHALTER

ENERGIE SPEICHER

KONDENSATOR (BANK)

KURZSCHLUSS-SCHALTER

KONSTANTER KREISWIDERSTAND

KONSTANTE KREISINDUKTIVITÄT

ABBILDUNG 4 : ERSATZSCHALTBILD

D/√2̄

ANZIEHENDE KRAFT  2 — 4

ABSTOSSENDE KRAFT  1 — 2

ABSTOSSENDE KRAFT  3 — 2

ABBILDUNG 5 :  KRAFT AUF LEITSCHIENEN

EP 0 371 081 B1

ABBILDUNG 6: ANORDNUNGEN NR. 1 BIS NR. 6 VON SYMMETRISCHEN LEITSCHIENEN-BESCHLEUNIGERN MIT 2 LEITSCHIENENPAAREN

ABBILDUNG 7: DER HERKÖMMLICHE LEITSCHIENENBESCHLEUNIGER
MIT 2 LEITSCHIENEN

ABBILDUNG 8: DER SYMMETRISCHE LEITSCHIENENBESCHLEUNIGER,
LEITSCHIENENQUERSCHNITT NR. 2 IN ABBILDUNG 6

ABBILDUNG 9: SYMMETRISCHER LEITSCHIENENBESCHLEUNIGER
MIT LEITSCHIENENQUERSCHNITT NR. 6 IN
ABBILDUNG 6